# EUROPÄISCHE PATENTANMELDUNG

(11) **EP 3 272 563 A1**
(43) Veröffentlichungstag der Anmeldung: **24.01.2018**
(21) Anmeldenummer: 16180096.6
(22) Anmeldetag: 19.07.2016
(51) Int. Cl.: B60J 1/00

(54) **ANORDNUNG, BEFESTIGUNGSELEMENT UND VERFAHREN ZUM HERSTELLEN EINER ANORDNUNG**

(71) Anmelder: Newfrey LLC, New Britain, CT 06053 (US)
(72) Erfinder: Kempf, Christian, 35394 Giessen (DE); Rosemann, Frank, 35394 Giessen (DE)
(74) Vertreter: SBD IPAdmin

(57) **Zusammenfassung**

Anordnung (10), insbesondere für die vorübergehende Fixierung einer Seitenscheibe während des Einbaus in eine Fahrzeugkarosserie, um die Seitenscheibe beim Aushärten eines Klebers in einer zur Karosserieaußenhaut definierten Solllage zu halten, mit einem ersten Element (12), einem zweiten Element (14), einem Fixierelement (16) und einer Hülse (18). Ein Umfangsabschnitt (60) des zweiten Elements (14) wirkt mit einer Kontaktfläche (52) der Hülse zusammen, um die Hülse (18) zwischen einer ersten Position und einer variablen Endposition zu verschieben, wobei die Hülse (18) in der Endposition eine kraftschlüssige Verbindung zwischen dem Fixierelement und dem Umfangabschnitt des zweiten Elements (14) ausbildet. Befestigungselement (20) und Verfahren zum Herstellen einer solchen Anordnung (10).

## Beschreibung

### Gebiet der Erfindung

Die vorliegende Erfindung betrifft eine Anordnung, insbesondere für die vorübergehende Fixierung einer Seitenscheibe während des Einbaus in eine Fahrzeugkarosserie, um die Seitenscheibe beim Aushärten eines Klebers in einer zur Karosserieaußenhaut definierten Solllage zu halten.

Ferner betrifft die vorliegende Erfindung ein Befestigungselement für eine solche Anordnung, sowie ein Verfahren zur Herstellung solcher Anordnungen.

### Hintergrund der Erfindung

Seitenscheiben werden mit der Fahrzeugkarosserie verklebt. Bis zum vollständigen Aushärten des verwendeten Klebstoffs muss die betreffende Seitenscheibe in einer definierten Solllage gehalten werden. Hierbei sind zum Teil erhebliche Toleranzschwankungen zu berücksichtigen, insbesondere dann, wenn die Seitenscheibe eine zur Karosserieaußenhaut definierte Solllage einnehmen muss.

Das Dokument DE102013020882B3 offenbart eine Fixieranordnung für die vorübergehende Fixierung einer Seitenscheibe während des Einbaus in eine Fahrzeugkarosserie, um die Seitenscheibe beim Aushärten des verwendeten Klebers in einer zur Karosserieaußenhaut definierten Solllage zu halten. Die Fixieranordnung umfasst einen in die Umspritzen der Seitenscheibe einbindbaren bzw. eingebundenen Bolzen bzw. Stift, der im Wesentlichen senkrecht zur Scheibenebene in Richtung der Fahrzeugkarosserie abragt, und eine karosserieseitig zu befestigende Hülse, die den Bolzen axialverschieblich aufnehmen kann. Der Bolzen ist mit einem Durchmesserübermaß bezüglich der Innenbohrung der Hülse ausgebildet, um eine definierte Reibung zwischen Bolzen und Hülse herbeizuführen, wodurch eine rastfreie axiale Fixierung des Bolzens in der Hülse ermöglicht und dennoch eine toleranzausgleichende axiale Bewegung des scheibenseitigen Bolzens relativ zur karosserieseitigen Hülse zugelassen wird. Diese Anordnung erlaubt einen Toleranzausgleich, aber die Montage solcher Anordnungen kann kompliziert sein, besonders da für verschiedene Ausführungen der Karosseriebauteile verschiedene Montageschritte oder -einstellungen nötig sind, um eine sichere Fixierung von Bolzen, Hülse und Karosseriebauteil zu gewährleisten.

Der vorliegenden Erfindung liegt daher die Aufgabe zugrunde, eine verbesserte Anordnung anzugeben, die vorzugsweise eine bessere Montageflexibilität ermöglicht.

### Zusammenfassung der Erfindung

Die oben genannte Aufgabe wird gelöst, durch eine Anordnung, insbesondere für die vorübergehende Fixierung einer Seitenscheibe während des Einbaus in eine Fahrzeugkarosserie, um die Seitenscheibe beim Aushärten eines Klebers in einer zur Karosserieaußenhaut definierten Solllage zu halten, mit:
- einem ersten Element, insbesondere einer Seitenscheibe,
- einem zweiten Element, insbesondere einem Karosseriebauteil, wobei das zweite Element ein durch einen Umfangsabschnitt des zweiten Elements gebildetes Loch aufweist,
- einem Fixierelement, das einen Schaft und einen Fixierflansch aufweist, wobei der Schaft sich entlang einer Schaftachse erstreckt, und wobei das Fixierelement mit dem ersten Element verbunden ist, und
- einer Hülse, die eine um eine Hülsenachse zentrierte Innenaufnahme aufweist, wobei die Innenaufnahme eine Druchgangsaufnahme ist, wobei die Hülse das Fixierelement axialverschieblich aufnimmt, und wobei die Hülse einen Hülsenflansch aufweist, der eine Kontaktfläche ausbildet,
dadurch gekennzeichnet, dass die Kontaktfläche mit dem Umfangsabschnitt des zweiten Elements zusammenwirkt, um die Hülse zwischen einer ersten Position und einer variablen Endposition axial entlang dem Schaft in Richtung des Fixierflansches zu verschieben, wobei die Hülse in der Endposition eine kraftschlüssige Verbindung zwischen dem Fixierelement und dem Umfangsabschnitt des zweiten Elements ausbildet.

Die Benutzung solcher Anordnungen ist besonders einfach und das Halten des ersten und zweiten Elements wird besonders gesichert. Die variable Endposition erlaubt eine gute Flexibilität des ersten und zweiten Elements, und erlaubt eine sichere Halterung auch bei verschiedenen Dicken des Blechs des ersten Elements und/oder des zweiten Elements während der Montage.

Gemäß einer weiteren bevorzugten Ausführungsform ist um das Fixierelement ein Anschlagabschnitt vorgesehen. Das zweite Element ist in der Endposition der Hülse in Anschlag mit dem Anschlagabschnitt. Die Endposition ist eine stabile Position durch den Anschlagabschnitt.

In einer bevorzugten Ausführungsform ist das Fixierelement durch Umspritzen des Fixierflansches mit dem ersten Element verbunden. Ein Spritzkranz wird durch Umspritzen ausgebildet. Der durch Umspritzen hergestellte Spritzkranz bildet den Anschlagabschnitt aus. Der Spritzkranz wird in einem Umspritzensschritt erzeugt (beispielsweise durch die Umspritzen der Fensterscheibe). Es ist keine zusätzliche Etappe nötig um den Spritzkranz (bzw. den Anschlagabschnitt) auszubilden.

In einer weiteren bevorzugten Ausführungsform weist die Hülse mindestens zwei Laschen auf, die elastisch mit dem Hülsenflansch verbunden sind. Die Laschen erstrecken sich jeweils entlang einer Hülsenachse zwischen einem ersten und einem zweiten Ende. Die ersten Enden sind mit dem Hülsenflansch verbunden. Die zweiten Enden sind freie Enden, die voneinander beabstandet sind. Die mindestens zwei Laschen bilden die Innenaufnahme aus. Die Form den Laschen erlaubt eine kraftschlüssige Verbindung zwischen dem ersten und dem zweiten Element. Die Blechstärke des ersten Elements kann variable sein.

In einer besonders bevorzugten Ausführungsform weist eine Lasche einen Vorsprung auf, der in die Innenaufnahme vorragt. Der Vorsprung erzeugt die Bewegung der Laschen, wenn ein Schaft in die Hülse eingesteckt wird.

In einer besonders bevorzugten Ausführungsform ist das Loch in dem zweiten Element ein Langloch. Das Langloch erlaubt einen Toleranzausgleich.

In einer besonders bevorzugten Ausführungsform weist das erste Element eine gewisse Dicke auf, und die Endposition der Hülse bezüglich des Schafts ist von der Dicke des ersten Elements abhängig.

In einer besonders bevorzugten Ausführungsform ist das erste Element eine Fensterseitenscheibe, und das zweite Element ist ein Karosseriebauteil.

Ferner wird die obige Aufgabe gelöst durch eine Befestigungselement für eine Anordnung wie bereits beschrieben, mit dem Fixierelement, das einen Schaft und einen Fixierflansch aufweist, wobei der Schaft sich entlang einer Schaftachse erstreckt und mit der Hülse, die eine auf eine Hülsenachse zentrierte Innenaufnahme aufweist, wobei die Hülse das Fixierelement axialverschieblich aufnehmen kann, wobei die Hülse einen Hülsenflansch aufweist, der eine Kontaktfläche ausbildet. Das Befestigungselement kann mit verschiedenen Blechstärken des zweiten Elements und/oder mit verschiedenen Dicke des ersten Elements benutzt werden.

In einer besonders bevorzugten Ausführungsform sind das Fixierelement und/oder die Hülse Kunststoffteile.

Schließlich wird die obige Aufgabe gelöst durch ein Verfahren zum Herstellen einer Anordnung, insbesondere wie bereits beschrieben, für die vorübergehende Fixierung einer Seitenscheibe während des Einbaus in eine Fahrzeugkarosserie, um die Seitenscheibe beim Aushärten eines Klebers in einer zur Karosserieaußenhaut definierten Solllage zu halten, mit den Schritten:
- Bereitstellen eines ersten Elements, insbesondere einer Seitenscheibe,
- Bereitstellen eines Fixierelements, das einen Schaft und einen Fixierflansch aufweist, wobei der Schaft sich entlang einer Schaftachse erstreckt,
- Positionieren des Fixierelements auf dem ersten Element,
- Befestigen des Fixierelements auf dem ersten Element durch Umspritzen, wobei ein Anschlagabschnitt um den Schaft durch Umspritzen ausgebildet wird,
- Bereitstellen einer Hülse, die eine auf eine Hülsenachse zentrierte Innenaufnahme aufweist, wobei die Innenaufnahme eine Druchgangsaufnahme ist, wobei die Hülse einen Hülsenflansch aufweist, der eine Kontaktfläche ausbildet,
- Aufstecken der Hülse auf den Schaft des Fixierelements in eine erste Position,
- Bereitstellen eines zweiten Elements, insbesondere eines Karosseriebauteils, wobei das zweite Element ein durch einen Umfangsabschnitt des zweiten Elements ausgebildetes Loch aufweist,
- Positionieren des Lochs gegenüber der Hülse,
- Schieben des zweiten Elements entlang der Hülsenachse, bis es in Kontakt mit der Kontaktfläche der Hülse kommt,
- Weiterschieben des zweiten Elements entlang der Hülsenachse, bis das zweite Element in Anschlag mit dem Anschlagabschnitt kommt, wobei die Anschlagposition des zweiten Elements mit dem Anschlagabschnitt der Endposition der Hülse entspricht, wobei die Endposition variabel ist und von dem ersten Element abhängig ist, und wobei die Hülse in der Endposition eine kraftschlüssige Verbindung zwischen dem Fixierelement und dem zweiten Element ausbildet

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine perspektivische schematische Ansicht einer erfindungsgemäßen Anordnung mit einem ersten Element, einem zweiten Element, einem Fixierelement und einer Hülse;
Fig. 2 das Fixierelement von Fig. 1;
Fig. 3 die Hülse von Fig. 1;
Fig. 4 die Hülse von Fig. 3 in einer ersten Position, wobei das Fixierelement sich teilweise in einer Innenaufnahme der Hülse erstreckt;
Fig. 5 das Fixierelement von Fig. 2 befestigt durch Umspritzen an dem ersten Element;
Fig. 6A eine Querschnittansicht der Anordnung von Fig. 1, wobei das erste Element eine erste Blechstärke aufweist;
Fig.6B eine Querschnittansicht der Anordnung von Fig. 1, wobei das erste Element eine zweite Blechstärke, die von der ersten Blechstärke verschieden ist, aufweist.

### Detaillierte Beschreibung bevorzugter Ausführungsformen vorliegender Erfindung

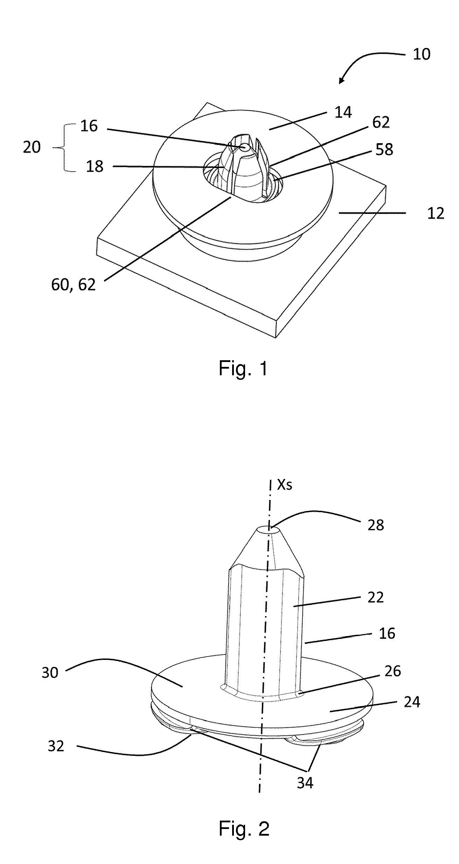

Fig. 1 zeigt eine Anordnung 10 mit einem ersten Element 12, einem zweiten Element 14, einem Fixierelement 16 und einer Hülse 18. Die Anordnung 10 ist insbesondere für die vorübergehende Fixierung einer Seitenscheibe (Fensterscheibe) während des Einbaus in eine Fahrzeugkarosserie, um die Seitenscheibe beim Aushärten eines Klebers in einer zur Karosserieaußenhaut definierten Solllage zu halten.

Das erste Element 12 ist im Wesentlichen eine Seitenscheibe. Das zweite Element 14 ist im Wesentlichen ein Karosseriebauteil (bzw. eine Karosserieaußenhaut). Die Anordnung 10 könnte aber auch benutzt werden, um zwei andere Elemente, zum Beispiel zwei andere Karosseriebauteile eines Kraftfahrzeugs zu verbinden.

Das zweite und das erste Element 12, 14 sind durch die Hülse 18 und das Fixierelement 16 verbunden. Im Wesentlichen bilden die Hülse 18 und das Fixierelement 16 ein Befestigungselement 20 aus.

Fig. 2 zeigt das Fixierelement 16. Das Fixierelement 16 weist einen Schaft 22 und einen Fixierflansch 24 auf. Der Schaft 22 erstreckt sich zwischen einem ersten Schaftende 26 und einem zweiten Schaftende 28 entlang einer Schaftachse Xs. Der Schaft 22 weist beispielsweise einen kreisförmigen Querschnitt auf. Der Schaft 22 kann auch einen ovalen Querschnitt aufweisen.

Der Fixierflansch 24 liegt am ersten Schaftende 26 an und erstreckt sich radial von der Schaftachse Xs nach außen. Der Fixierflansch 24 weist eine erste Oberfläche 30 und eine zweite Oberfläche 32 auf, die gegenüber der ersten Oberfläche 30 liegt. Die erste Oberfläche 30 liegt gegenüber des Schafts 22. Die zweite Oberfläche 32 ist geeignet, um auf dem ersten Element 12 positioniert und danach befestigt zu werden. Die zweite Oberfläche 32 weist beispielsweise Übergriffelemente 34 auf, die die Befestigung des Fixierelements 16 auf dem ersten Element 12 vereinfachen.

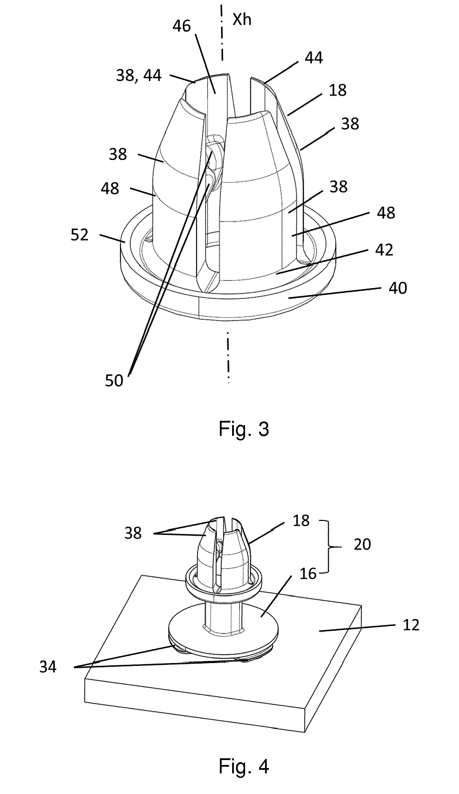

Der Schaft 22 ist geeignet, um mit der Hülse 18 zu kooperieren, wie in Fig. 4 dargestellt.

Fig. 3 stellt die Hülse 18 dar. Die Hülse 18 weist eine auf eine Hülsenachse Xh zentrierte Innenaufnahme 36 auf. Die Innenaufnahme 36 ist eine Druchgangsaufnahme. Die Hülse 18 kann das Fixierelement 16 axialverschieblich aufnehmen. Die Hülse 18 weist mindestens zwei Laschen 38 auf.

In einer möglichen Ausführung, wie bereits in Fig. 3 dargestellt, weist die Hülse 18 vier Laschen 38 auf. In andere Ausführungsformen können drei oder mehr als vier Lasche vorgesehen sein. Die Hülse 18 weist einen Hülsenflansch 40 auf. Der Hülsenflansch 40 erstreckt sich radial von der Hülsenachse Xh nach außen. Die Laschen 38 sind elastisch mit dem Hülsenflansch 40 verbunden.

In einer anderen Ausführungsform ist beispielsweise eine Lasche elastisch mit dem Hülsenflansch 40 verbunden und eine Lasche "fest" mit dem Hülsenflansch 40 verbunden. In diesem Fall bewegt sich relativ zum Hülsenflansch 40 nur eine Lasche 38.

Jede Lasche 38 erstreckt sich entlang einer Achse zwischen einem ersten und einem zweiten Ende 42, 44. Das erste Ende 42 ist elastisch mit dem Hülsenflansch 40 verbunden. Das zweite Ende 44 ist ein "freies" Ende und hat einem Abstand zu den anderen zweiten Enden 44 der anderen Laschen 38.

Die Hülse 18 ist beispielsweise ein Kunststoffteil. Die Hülse 18 ist beispielsweise durch Umspritzen hergestellt. Die Laschen 38 bilden die Innenaufnahme 36 aus. Die Lasche 38 weist eine erste Oberfläche und eine zweite Oberfläche 46, 48 auf. Die erste Oberfläche 46 bildet einen Teil der Innenaufnahme 36 aus. Die erste Oberfläche 46 weist beispielsweise einen Vorsprung 50 auf.

Der Hülsenflansch 40 bildet eine Kontaktfläche 52 aus. Die Kontaktfläche 52 erstreckt sich axial in Richtung des zweiten Endes 44. Die Kontaktfläche 52 ist beispielsweise ringförmig und erstreckt sich kontinuierlich.

Wie bereits in Fig. 4 dargestellt, kann die Hülse 18 das Fixierelement 16 axialverschieblich aufnehmen. Hülsenachse Xh und Schaftachse Xs fallen beispielsweise zusammen. Die Laschen 38 bilden eine Querschnittsminderung der Innenaufnahme 36 aus, die den Schaft 22 halten kann. Je weiter der Schaft 22 in der Innenaufnahme 36 verschoben wird, desto mehr werden die Laschen 38 sich radial nach außen bewegen (beispielsweise dank der Vorsprung 50). Fig. 4 stellt die Hülse 18 in einer ersten Position dar. Der Schaft 22 ist teilweise in der Innenaufnahme 36 der Hülse 18 aufgenommen. Keine Kraft wird auf die Vorsprünge 50 ausgeübt und die Laschen 38 der Hülse 18 sind in einer Ruhestellung.

Das Fixierelement 16 wird auf dem ersten Element 12 positioniert, wie bereits in Fig. 4 dargestellt und dann auf dem ersten Element 12 befestigt. Die Befestigung kann beispielsweise durch Kleben, Schweißen oder alternative Verbindungstechniken erfolgen.

Im Wesentlichen wird diese Befestigung durch das Umspritzen des ersten Elements 12 (insbesondere der Seitenscheibe) erzeugt. Das Umspritzen wird beispielsweise durch die Übergiffelemente 34 verbessert.

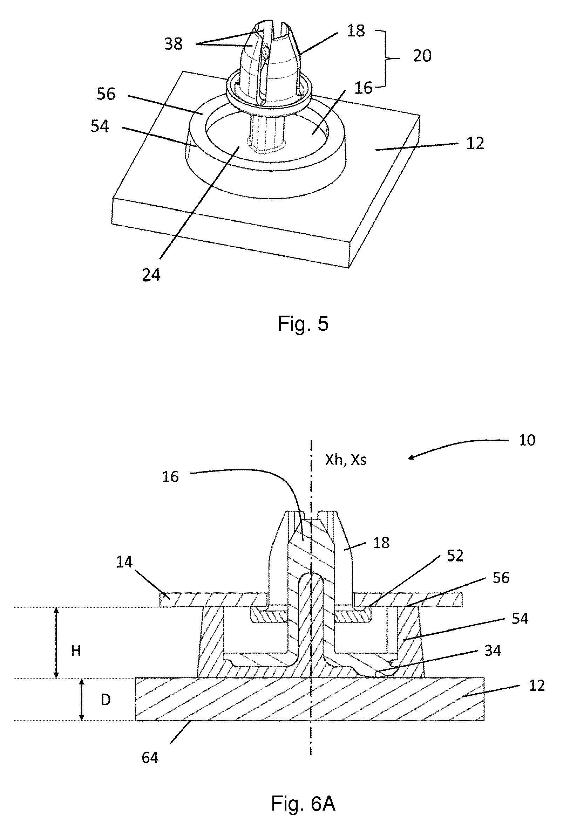

Fig. 5 zeigt das Fixierelement 16 befestigt mit dem ersten Element 12. Ein Spritzkranz 54 ist um den Fixierflansch 24 vorgesehen. Der Spritzkranz 54 weist einen Anschlagabschnitt 56 auf. Der Spritzkranz 54 wird beispielsweise durch das Umspritzen der Seitenscheibe hergestellt. Der Spritzkranz 54 wird durch Umspritzen mit einer definierten Höhe H erzeugt. Das erste Element 12 (insbesondere die Seitenscheibe) weist eine gewisse Dicke D (oder Stärke) entlang einer Richtung parallel zur Schaftsachse Xs auf. Je nach Seitenscheibe oder Fahrzeugmodel kann die Dicke D des ersten Elements 12 sich ändern.

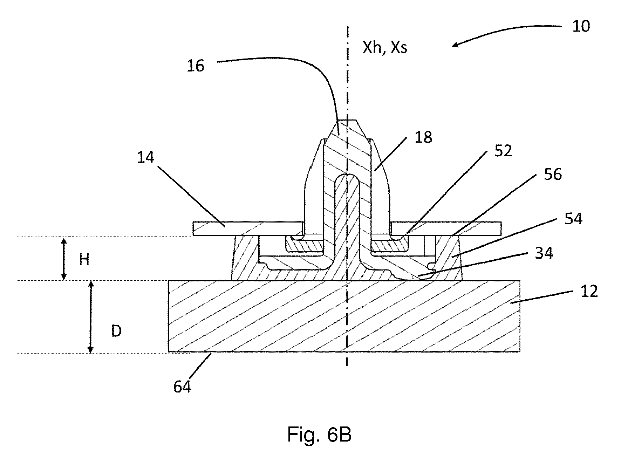

Die Höhe H des Spritzkranzes 54 (bzw. des Anschlagsabschnitts) wird an die Dicke D des ersten Elements angepasst. Je dicker das erste Element 12 ist, desto kleiner ist die Höhe H des Anschlagabschnitts 56, wie bereits in Fig. 6A und 6B dargestellt.

Um das erste Element 12 mit dem zweiten Element 14 kraftschlüssig zu verbinden, ist ein Loch 58 in dem zweiten Element 14 vorgesehen. Das Loch 58 ist vorzugsweise ein Langloch. In einer anderen Ausführungsform ist das Loch 58 kreisförmig. Das Loch 58 ist durch einen Umfangabschnitt 60 ausgebildet. Das Loch 58 des zweiten Elements 14 wird dann gegenüber dem Schaft 22 und den Laschen 38 angebracht.

Das zweite Element 14 wird entlang der Schaftachse Xs verschoben, bis es in Kontakt mit der Kontaktfläche 52 der Hülse 18 kommt. Die Hülse 18 ist in einer ersten Position.

Das zweite Element 14 wird dann entlang der Schaftachse Xs weiter verschoben. Das zweite Element 14 wird die Hülse 18 durch die Kontaktfläche 52 entlang der Schaftachse Xs schieben. Die Laschen 38 werden sich radial nach außen bewegen und in Kontakt mit dem Umfangabschnitt des zweiten Elements 14 kommen. Das zweite Element 14 wird entlang der Schaftachse Xs weiter verschoben, bis es mit dem Anschlagabschnitt 56 in Kontakt kommt. Die Hülse 18 ist dann in einer Endposition. Die Endposition wird durch die Höhe H des Anschlagabschnitts 56 (oder Höhe des Spritzkranzes 54) bestimmt. Der Umfangabschnitt 60 des Loches 58 bildet Anlageflächen 62 (insbesondere mindestens zwei Anlageflächen 62) an denen die Laschen 34 sicher verrasten können. Die kraftschlüssige Verbindung zwischen dem Fixierelement 16 und dem zweiten Element 14 ist von der Blechstärke des zweiten Elements unabhängig. Die kraftschlüssige Verbindung zwischen dem Fixierelement 16 und dem zweiten Element 14 findet mit verschiedene Blechstärke des zweiten Elements statt. Eine Änderung der Blechstärke des ersten Elements wird beispielsweise die Montagekräfte ändern, aber nicht die Halterung und das Verrasten.

In einer anderen Ausführungsform (nicht dargestellt) weist die Lasche einen Hinterschnitt. Der Hinterschnitt ist auf der zweiten Oberfläche 48 der Lasche ausgebildet. Der Hinterschnitt ragt nach außen vor. Der Hinterschnitt wirkt mit dem zweiten Element (bzw. mit dem Umfangabschnitt 60) zusammen, um die kraftschlüssige Verbindung zwischen dem Fixierelement und dem Umfangabschnitt des zweiten Elements auszubilden. Der Hinterschnitt kann als Alternative oder Ergänzung zu der Vorsprung 50 vorgesehen.

Beispielweise kann das zweite Element 14 eine Blechstärke (Dicke) haben, die zwischen 0.5 Millimeter und 1.8 Millimeter ist, und insbesondere zwischen 0.75 Millimeter und 1.15 Millimeter ist. Wie bereits beschrieben kann das Befestigungselement 20 mit verschiedene Blechstärke des zweiten Elements 14 und/oder verschiedene Dicke D des ersten Elements 12 benutzt werden. Das erste Element 12 hat zum Beispiel eine Dicke D, die zwischen 3.18 Millimeter und 5.2 Millimeter ist. Die Distanz zwischen dem Anschlagabschnitt 56 und der untere Oberfläche 64 des ersten Elements 12 ist konstant und unabhängig von der Dicke (Blechstärke) des ersten Elements 12. Die Distanz zwischen dem Anschlagabschnitt und der untere Oberfläche 64 des ersten Elements 12 ist beispielsweise 8,45 Millimeter. Die Höhe H des Anschlagabschnitts 56 ist beispielsweise 5,3 Millimeter wenn das Blech des ersten Elements 12 eine Dicke von 3,18 Millimeter aufweist.

## Patentansprüche

1. Anordnung (10), insbesondere für die vorübergehende Fixierung einer Seitenscheibe während des Einbaus in eine Fahrzeugkarosserie, um die Seitenscheibe beim Aushärten eines Klebers in einer zur Karosserieaußenhaut definierten Solllage zu halten, mit:
- einem ersten Element (12), insbesondere einer Seitenscheibe,
- einem zweiten Element (14), insbesondere einem Karosseriebauteil, wobei das zweite Element (14) ein durch einen Umfangsabschnitt (60) des zweiten Elements gebildetes Loch (58) aufweist,
- einem Fixierelement (16), das einen Schaft (22) und einen Fixierflansch (24) aufweist, wobei der Schaft (22) sich entlang einer Schaftachse (Xs) erstreckt, und wobei das Fixierelement (16) mit dem ersten Element (12) verbunden ist, und
- einer Hülse (18), die eine um eine Hülsenachse (Xh) zentrierte Innenaufnahme (36) aufweist, wobei die Innenaufnahme (36) eine Druchgangsaufnahme ist, wobei die Hülse (18) das Fixierelement (16) axialverschieblich aufnimmt, und wobei die Hülse (18) einen Hülsenflansch (40) aufweist, der eine Kontaktfläche (52) ausbildet,
**dadurch gekennzeichnet, dass** die Kontaktfläche (52) mit dem Umfangsabschnitt (60) des zweiten Elements (14) zusammenwirkt, um die Hülse (18) zwischen einer ersten Position und einer variablen Endposition axial entlang dem Schaft (22) in Richtung des Fixierflansches (24) zu verschieben, wobei die Hülse (18) in der Endposition eine kraftschlüssige Verbindung zwischen dem Fixierelement und dem Umfangabschnitt des zweiten Elements (14) ausbildet.

2. Anordnung (10) nach Anspruch 1, wobei um das Fixierelement (16) ein Anschlagabschnitt (56) vorgesehen ist, und wobei das zweite Element (14) in der Endposition der Hülse (18) in Anschlag mit dem Anschlagabschnitt (56) ist.

3. Anordnung (10) nach Anspruch 2, wobei das Fixierelement (16) durch Umspritzen des Fixierflansches (24) mit dem ersten Element (12) verbunden ist, wobei durch Umspritzen ein Spritzkranz (54) ausgebildet ist, und wobei der durch Umspritzen hergestellte Spritzkranz (54) den Anschlagabschnitt (56) ausbildet.

4. Anordnung (10) nach einem der Ansprüche 1-3, wobei die Hülse (18) mindestens zwei Laschen (38) aufweist, die elastisch mit dem Hülsenflansch (40) verbunden sind, wobei die Laschen (38) sich jeweils entlang einer Hülsenachse (Xh) zwischen einem ersten und einem zweiten Ende erstrecken, wobei die ersten Enden (42) mit dem Hülsenflansch (40) verbunden sind, wobei die zweiten Enden (44) freie Enden sind, die voneinander beabstandet sind, und wobei die mindestens zwei Laschen (38) die Innenaufnahme ausbilden.

5. Anordnung (10) nach Anspruch 4, wobei eine Lasche (38) ein Vorsprung (50) aufweist, der in die Innenaufnahme (36) vorragt.

6. Anordnung (10) nach einem der Ansprüche 1-5, wobei das Loch (58) in dem zweiten Element einen Langloch ist.

7. Anordnung (10) nach einem der Ansprüche 1-6, wobei das erste Element (12) eine gewisse Dicke (D) aufweist, und die Endposition der Hülse bezüglich des Schafts (22) von der Dicke des ersten Elements (12) abhängig ist.

8. Anordnung (10) nach einem der Ansprüche 1-7, wobei das erste Element (12) eine Seitenscheibe ist, und wobei das zweite Element (14) ein Karosseriebauteil ist.

9. Befestigungselement (20) für die Anordnung 10 nach einem der Ansprüche 1-8, mit dem Fixierelement (16), das einen Schaft (22) und einen Fixierflansch (24) aufweist, wobei der Schaft sich entlang einer Schaftachse erstreckt und mit der Hülse, die eine auf eine Hülsenachse zentrierte Innenaufnahme aufweist, wobei die Hülse (18) das Fixierelement axialverschieblich aufnehmen kann, wobei die Hülse (18) einen Hülsenflansch aufweist, der eine Kontaktfläche ausbildet, wobei die Innenaufnahme eine Druchgangsaufnahme ist.

10. Befestigungselement (20) nach Anspruch 9, wobei das Fixierelement (16) und/oder die Hülse (18) Kunststoffteile sind.

11. Verfahren zum Herstellen einer Anordnung (10), insbesondere nach einem der Ansprüche 1-7, für die vorübergehende Fixierung einer Seitenscheibe während des Einbaus in eine Fahrzeugkarosserie, um die Seitenscheibe beim Aushärten eines Klebers in einer zur Karosserieaußenhaut definierten Solllage zu halten, mit den Schritten:
- Bereitstellen eines ersten Elements (12), insbesondere einer Seitenscheibe,
- Bereitstellen eines Fixierelements (16), das einen Schaft und einen Fixierflansch aufweist, wobei der Schaft sich entlang einer Schaftachse erstreckt,
- Positionieren des Fixierelements (16) auf dem ersten Element,
- Befestigen des Fixierelements auf dem ersten Element (12) durch Umspritzen, wobei ein Anschlagabschnitt um den Schaft durch Umspritzen ausgebildet wird,
- Bereitstellen einer Hülse (18), die eine auf eine Hülsenachse (Xh) zentrierte Innenaufnahme (36) aufweist, wobei die Innenaufnahme (36) eine Druchgangsaufnahme ist, wobei die Hülse (18) einen Hülsenflansch aufweist, der eine Kontaktfläche ausbildet,
- Aufstecken der Hülse (18) auf den Schaft (22) des Fixierelements (16) in eine erste Position,
- Bereitstellen eines zweiten Elements (14), insbesondere eines Karosseriebauteils, wobei das zweite Element ein durch einen Umfangsabschnitt des zweiten Elements ausgebildetes Loch (58) aufweist,
- Positionieren des Lochs (58) gegenüber der Hülse,
- Schieben des zweiten Elements (14) entlang der Hülsenachse, bis es in Kontakt mit der Kontaktfläche der Hülse kommt,
- Weiterschieben des zweiten Elements (14) entlang der Hülsenachse, bis das zweite Element in Anschlag mit dem Anschlagabschnitt (56) kommt, wobei die Anschlagposition des zweiten Elements (14) mit dem Anschlagabschnitt (56) der Endposition der Hülse (18) entspricht, wobei die Endposition variabel ist und von dem ersten Element abhängig ist, und wobei die Hülse in der Endposition eine kraftschlüssige Verbindung zwischen dem Fixierelement und dem zweiten Element ausbildet.

12. Verfahren nach Anspruch 11, wobei das erste Element (12) eine gewisse Dicke aufweist, wobei die Höhe des Anschlagabschnitts (56) auf die Dicke des ersten Elements (12) abgestimmt wird.

13. Verfahren nach Anspruch 12, wobei das Positionieren und das Befestigen des Fixierelements (16) mit dem ersten Element (12) unabhängig von der Dicke des ersten Elements (12) sind.

14. Verfahren nach einem der Ansprüche 11-13, wobei die Hülse mindestens zwei Laschen (38) aufweist, die elastisch mit dem Hülsenflansch verbunden sind, wobei die Laschen (38) sich jeweils entlang der Hülsenachse zwischen einem ersten und einem zweiten Ende erstrecken, wobei die ersten Enden mit dem Hülsenflansch verbunden sind, wobei die zweiten Enden freie Enden sind, die voneinander beabstandet sind, und wobei sich die zweiten Enden während dem Schieben und dem Weiterschieben des zweiten Elements entlang der Hülsenachse voneinander weg bewegen, um den Schaft (22) in der Innenaufnahme (36) weiter aufzunehmen.

15. Verfahren nach Anspruch 14, wobei die Bewegung der zweiten Enden (44) den Laschen (38) während dem Schieben und dem Weiterschieben des zweiten Elements (14) ein Verrasten mit dem zweiten Element (14) ausbildet.
